# EUROPÄISCHE PATENTANMELDUNG

(11) **EP 2 727 841 A1**
(43) Veröffentlichungstag der Anmeldung: **07.05.2014**
(21) Anmeldenummer: 13004300.3
(22) Anmeldetag: 31.08.2013
(51) Int. Cl.: B64F 1/305

(54) **Vordach einer Fluggastbrücke oder Fluggasttreppe**

(30) Priorität: 01.11.2012 DE 202012010406 U
(71) Anmelder: Hübner GmbH, 34123 Kassel (DE)
(72) Erfinder: Fülling, Jürgen Karl-Heinz, 34388 Trendelburg (DE); Karasek, Jens, 34260 Kaufungen (DE); Mosanier, Knud, 34127 Kassel (DE)
(74) Vertreter: Walther, Walther & Hinz GbR

(57) **Zusammenfassung**

Gegenstand der Erfindung ist ein Vordach (1) einer Fluggastbrücke oder Fluggasttreppe, wobei das Vordach einen zumindest U-förmig umlaufenden Bumper (5) aufweist, wobei zumindest der Dachschenkel (6) des Bumpers (5) stirnseitig mindestens einen Vorsatz (10, 10a, 14, 17) aufweist, der eine höhere Elastizität besitzt als der Bumper (5).

## Beschreibung

Die Erfindung betrifft das Vordach einer Fluggastbrücke oder Fluggasttreppe, wobei das Vordach stirnseitig, also auf den Rumpf des Flugzeugs zuweisend, einen zumindest U-förmig umlaufenden Bumper aufweist.

Fluggasttreppen und Fluggastbrücken sind hinreichend bekannt. Üblicherweise weisen derartige Fluggasttreppen und Fluggastbrücken an ihrer dem Flugzeug zugewandten Seite ein sogenanntes Vordach auf, das üblicherweise als Faltenvordach ausgebildet ist. Dieses Vordach ist in der Ansicht etwa U-förmig ausgebildet, wobei an den beiden Schenkeln des U-förmig ausgebildeten Vordaches sowie im Bereich des Steges ein Bumper vorgesehen ist. Der Bumper bzw. die einzelnen den Bumper bildenden Elemente sind üblicherweise mittels Klettband auf dem stirnseitigen Rahmen des Vordaches angeordnet. Der Bumper selbst weist eine im Querschnitt rechteckförmige Hülle aus einem mit einem Elastomer beschichteten Festigkeitsträger, z. B. einem Gewebe auf. Diese Hülle aus dem mit einem Elastomer beschichteten Gewebe umgibt ein im Innern der Hülle angeordnetes weichelastisches Material z. B. einen Schaumstoff.

Mit diesem Bumper liegt das Vordach an der Außenhaut des Flugzeuges an, um eine Abdichtung des Übergangs zwischen der Fluggastbrücke und dem Flugzeug vor Witterungseinflüssen bereitzustellen. Die Ausbildung derartiger Vordächer insbesondere als Faltenvordächer ist aus dem Stand der Technik bekannt. Im Bereich der Schenkel des U-förmig umlaufenden Bumpers ist der Bumper sehr flexibel ausgebildet, damit sich der Bumper des Vordaches an die gewölbte Außenhaut des Flugzeuges anschmiegen kann. Im Dachbereich liegt der Steg des Bumpers dann an der Außenhaut des Flugzeuges an, wenn das Vordach mit dem Steg des Vordaches weit auf das Dach ragt. Dies deshalb, weil dann das Eigengewicht des Vordaches der Fluggastbrücke oder Fluggasttreppe für ein im Wesentlichen abdichtendes Aufliegen des Steges des U-förmig ausgebildeten Bumpers sorgt.

Anders stellt sich die Angelegenheit dann dar, wenn die Anlage des Vordaches im Eingangsbereich des Flugzeuges dort erfolgt, wo der Rumpf des Flugzeuges aufgrund der Größe des Flugzeugrumpfes nahezu senkrecht verläuft. Dies ist beispielsweise der Fall bei dem Airbus 380. Dort gibt es zwei übereinander angeordnete Türeinstiege, wobei der obere Türeinstieg sich bereits in den Dachbereich des Flugzeugrumpfes erstreckt, und das Vordach aufgrund des Eigengewichtes diesen Zustieg in der Lage ist ausreichend abzudichten. Bei dem darunter befindlichen Türeinstieg liegt der Bumper im Bereich des Steges nur mit geringer Kraft an dem Flugzeugrumpf an, da die Schenkel des Bumpers nahezu senkrecht verlaufen. Insbesondere dann, wenn der Flugzeugrumpf in diesem Bereich in Längsrichtung auch nur leicht gekrümmt ist, ergeben sich Spalte zwischen der Stirnseite des Bumperstegs und dem Flugzeugrumpf, die den Eintritt von Wasser ermöglichen. Dies ist unbefriedigend, da in diesem Bereich häufig zusteigende Passagiere stehen und warten, um in das Flugzeug zu gelangen.

Die der Erfindung zugrunde liegende Aufgabe besteht demzufolge darin, für einen vollständig dichten Anschluss des Bumpers auch im Dachbereich des Bumpers am Flugzeugrumpf zu sorgen.

Zur Lösung der Aufgabe wird erfindungsgemäß vorgeschlagen, dass zumindest der Dachschenkel des Bumpers oder Bumpersteg stirnseitig mindestens einen Vorsatz aufweist, der eine höhere Elastizität aufweist als der Bumper. Das heißt, dass der Vorsatz in Bezug auf seine Elastizität nachgiebiger ist, als der Bumper, was zur Folge hat, dass durch den Vorsatz noch bestehende kleine Spalte zwischen Bumpersteg und Außenhaut des Flugzeugs überbrückt werden können, die durch den Bumper aufgrund seiner höheren Steifigkeit nicht geschlossen werden können. Durch eine solche zweistufige Ausgestaltung des Bumpers durch einen Vorsatz auf der Stirnseite des Bumpers, der elastischer ist als das Material des Bumpers selbst, kann somit auf einfache Art und Weise für die Abdichtung des Übergangs zwischen dem Vordach und der Außenhaut des Flugzeugs gesorgt werden.

Vorteilhafte Merkmale und Ausgestaltungen zu der Erfindung ergeben sich aus den Unteransprüchen.

So ist insbesondere vorgesehen, dass der Vorsatz als mit einem Elastomer beschichteter Festigkeitsträger, z. B. ein Gewebe, ausgebildet ist, der unter Bildung eines Abstandes zur Stirnseite des Bumpers verläuft, da das mit einem Elastomer beschichtete Gewebe eine gewisse Steifigkeit aufweist. Im einfachsten Fall besteht somit der Vorsatz aus einem mit einem Elastomer beschichteten Gewebe, dass beabstandet zur Stirnseite des Bumpers am Bumper angeordnet verläuft. Der Abstand zwischen dem Scheitelpunkt des beschichteten Gewebes als Vorsatz und der Stirnseite des Bumpers beträgt zwischen 10 und 40 mm. Hieraus wird deutlich, dass dann, wenn der Bumper beispielsweise im Bereich der Übergänge von dem Dachschenkel oder Bumpersteg zu den Schenkeln des Bumpers an der Flugzeughaut anliegt, der Bumper mittig aber einen Abstand zur Flugzeughaut aufweist, dieser Abstand durch das beschichtete Gewebe als Vorsatz vor dem Bumper überbrückt werden kann.

In diesem Zusammenhang ist auch denkbar den Vorsatz als elastischen Schlauch auszubilden, der insbesondere aus einem weichen, nachgiebigen Polyurethan hergestellt sein kann.

Wiederum eine andere Ausführungsform zeichnet sich dadurch aus, dass der Vorsatz als Dichtlippe ausgebildet ist, die vorteilhaft im Querschnitt nach Art einer Halbschale geformt ist, wobei eine solche schalenförmige Dichtlippe nach oben hin geöffnet ist, sodass diese schalenförmige Dichtlippe die Funktion einer Regenrinne verwirklicht.

Vorteilhaft erstreckt sich der Vorsatz über die Länge des Dachschenkels des U-förmigen Bumpers des Vordaches, er kann sich allerdings auch darüber hinaus erstrecken. Der Vorsatz ist insbesondere lösbar mit dem Bumper verbindbar, beispielsweise mittels eines Klettbandverschlusses oder durch Druckknöpfe.

Es sei an dieser Stelle auch darauf hingewiesen, dass die Erfindung auch eine Kombination verschiedener Vorsatzarten umfasst. Das heißt, dass beispielsweise ein Vorsatz aus einem mit einem Elastomer beschichteten Gewebe, der parallel zum Bumpersteg oder Dachschenkel des U-förmigen Bumpers verläuft, und der an dem Bumper insbesondere lösbar befestigt ist, ergänzt ist durch beispielsweise einen weiteren Vorsatz in Form einer Dichtlippe, wie sie zuvor beschrieben wurde. Die Dichtlippe befindet sich am oberen Ende des Bumpersteges oder Dachschenkels und sorgt für eine zusätzliche Abdichtung. Gleiches gilt für einen als Vorsatz ausgebildeten Schlauch, der beispielsweise innerhalb des Raumes verlaufen kann, der durch das mit einem Elastomer beschichteten Gewebe mit der Stirnseite des Bumpers gebildet wird. Allerdings besteht auch die Möglichkeit, sowohl die Dichtlippe als auch den Schlauch als Vorsätze einzeln zu verwenden.

Denkbar ist ebenfalls bei einem Vorsatz, der einen Raum umschließt, dieser Raum luftdicht zu gestalten und mit einem Ventil zu versehen, um Luft einzuführen. Hierdurch wird erreicht, dass sich der Vorsatz noch besser an die Kontur der Außenhaut des Flugzeugs anpassen kann. Im Bereich der vertikalen Schenkel des Bumpers würde der Vorsatz stark zusammengedrückt, im Mittenbereich würde er sich ausdehnen, also genau dort, wo ggf. auch aufgrund der verminderten Anpresskraft eine Lücke entsteht.

Anhand der Zeichnungen wird die Erfindung nachstehend beispielhaft näher erläutert.

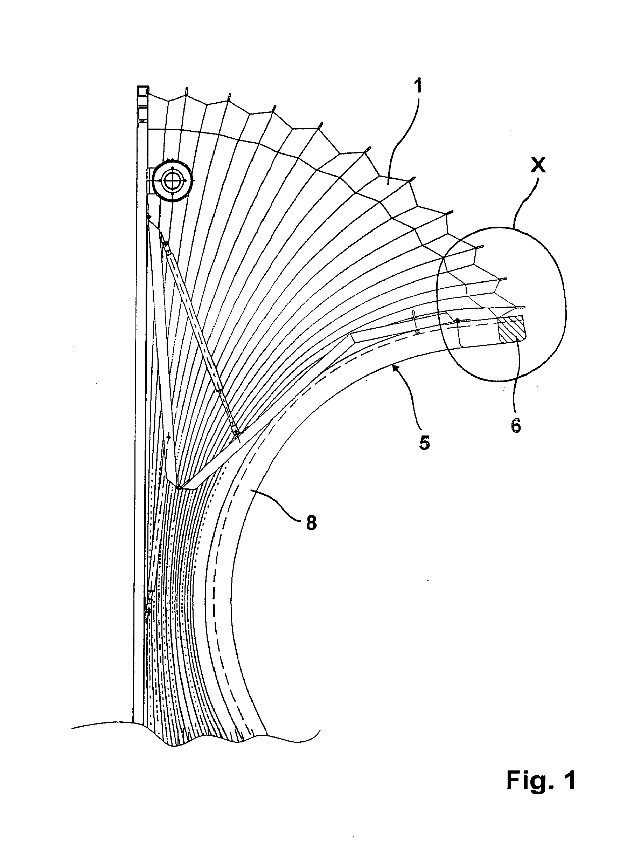

- Fig. 1: zeigt in einer Seitenansicht ein Faltenvordach;
- Fig. 2: zeigt den Ausschnitt X aus Fig. 1 im Schnitt in vergrößerter Darstellung, wobei stirnseitig an dem Bumper ein Vorsatz in einer ersten Ausführungsform angeordnet ist;
- Fig. 3: zeigt den Ausschnitt X aus Fig. 1 im Schnitt in vergrößerter Darstellung mit einer zweiten Ausführungsform des Vorsatzes;
- Fig. 4: zeigt den Ausschnitt X aus Fig. 1 im Schnitt in vergrößerter Darstellung mit einer dritten Ausführungsform des Vorsatzes;
- Fig. 5: zeigt den Ausschnitt X aus Fig. 1 im Schnitt in vergrößerter Darstellung, mit einer vierten Ausführungsform des Vorsatzes.

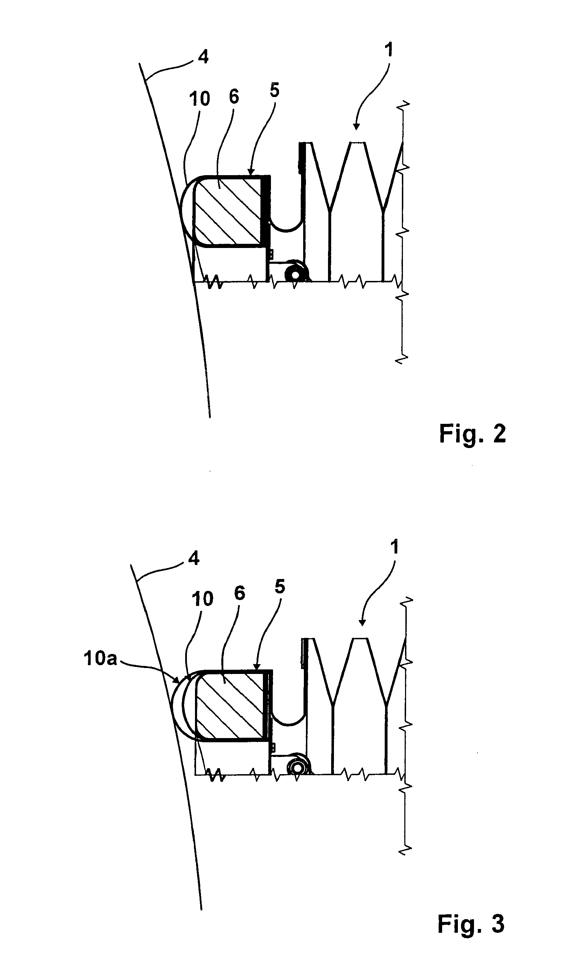

Das insgesamt mit 1 bezeichnete Vordach, das als Faltenvordach ausgebildet ist, zeigt stirnseitig den mit 5 bezeichneten U-förmig umlaufenden Bumper, wobei der Bumper 5 einen im Wesentlichen horizontal verlaufenden Bumpersteg oder Dachschenkel 6 aufweist, an den sich zu beiden Enden die im rechten Winkel dazu verlaufenden Seitenschenkel 8 anschließen. In den Figuren 2 bis 5 sind nun verschiedene Ausführungsformen eines Vorsatzes dargestellt, so wie er an der Stirnseite des Bumpers 5 und hier insbesondere des Dachschenkels 6 angeordnet sein kann.

Bei der ersten Ausführungsform gemäß Fig. 2 ist an dem Dachschenkel 6 des Bumpers 5 eine mit einem Elastomer beschichtete Gewebebahn als Vorsatz 10 vorgesehen, der beabstanded zu der Stirnseite des Bumpers verläuft. Der Bumper ist somit als zweistufiger Bumper ausgebildet, wobei die erste Stufe durch den als Gewebebahn ausgebildeten Vorsatz 10 gebildet wird, und die zweite Stufe durch den eigentlichen Bumper 5, der ebenfalls eine mit einem Elastomer beschichtete Gewebebahn aufweist, die eine Leiste aus einem Schaumstoff umgibt. Die Gewebebahn kann hierbei mittels Klettband an dem Rahmen des Vordachs lösbar befestigt sein. Das heißt, bei Anliegen an der Außenhaut 4 des Flugzeuges verformt sich zunächst der Vorsatz 10, bevor sich der eigentliche Bumper 5 an die Außenhaut des Flugzeugs anlegt.

Aus der Darstellung gemäß Fig. 3 ergibt sich ein dreistufiger Bumper, wobei der Bumper zwei Vorsätze 10, 10a jeweils in Form einer beschichteten Gewebebahn, wie zuvor beschrieben, aufweist. Die beiden Vorsätze sind beabstandet zueinander und zu der Stirnseite des Bumpers 5 am Bumpersteg 6 angeordnet.

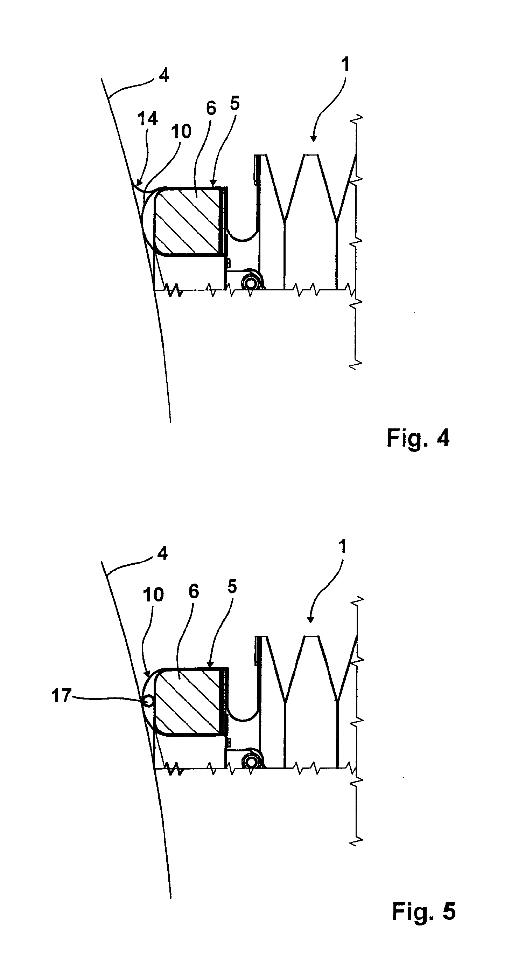

Bei der Ausführungsform gemäß Fig. 4 zeigt der Bumper 5 den Vorsatz 10, wobei der Bumper darüber hinaus im Bereich der Oberseite des Bumperstegs eine Dichtlippe 14 als weiteren Vorsatz zeigt. Die Dichtlippe zeigt eine Erstreckung quer zu ihrer Längsachse, die zumindest der Erstreckung des darunter befindlichen Vorsatzes entspricht.

Die Fig. 5 zeigt eine Ausführungsform gemäß Fig. 2, wobei zwischen dem Vorsatz 10 und der Stirnseite des Bumpers 5 ein Schlauch 17 aus elastisch nachgiebigem Material angeordnet ist. Auch in Kombination des Vorsatzes 10 mit dem Schlauch ist die Elastizität dieser Einheit größer, als die des Bumpers selbst.

Es sei an dieser Stelle noch einmal darauf hingewiesen, dass sowohl die Dichtlippe 14 als auch der Schlauch 17 eigenständige Vorsätze an dem Bumper 5 bilden können, das heißt auch in Alleinstellung eine Abdichtfunktion übernehmen. Auch können die unterschiedlichen Vorsätze beliebig kombiniert werden, also z. B. auch die Dichtlippe mit dem Schlauch.

### Bezugszeichenliste:

- 1: Vordach
- 4: Außenhaut
- 5: Bumper
- 6: Dachschenkel des Bumpers (Bumpersteg)
- 8: Seitenschenkel des Bumpers
- 10: Vorsatz
- 10a: Vorsatz
- 14: Dichtlippe
- 17: Schlauch

## Patentansprüche

1. Vordach (1) einer Fluggastbrücke oder Fluggasttreppe, wobei das Vordach einen zumindest U-förmig umlaufenden Bumper (5) aufweist,
**dadurch gekennzeichnet,**
**dass** zumindest der Dachschenkel (6) des Bumpers (5) stirnseitig mindestens einen Vorsatz (10, 10a, 14, 17) aufweist, der eine höhere Elastizität besitzt als der Bumper (5).

2. Vordach (1) einer Fluggastbrücke oder Fluggasttreppe nach Anspruch 1,
**dadurch gekennzeichnet,**
**dass** der Vorsatz (10) als mit einem Elastomer beschichteter Festigkeitsträger ausgebildet ist, der unter Bildung des Abstandes zur Stirnseite des Bumpers (5) verläuft.

3. Vordach (1) einer Fluggastbrücke oder Fluggasttreppe nach Anspruch 1 oder 2,
**dadurch gekennzeichnet,**
**dass** der Vorsatz (17) als Schlauch ausgebildet ist, der auf der Stirnseite des Bumpers (5) angeordnet ist.

4. Vordach (1) einer Fluggastbrücke oder Fluggasttreppe nach einem der voranstehenden Ansprüche,
**dadurch gekennzeichnet,**
**dass** der Vorsatz (14) als Dichtlippe ausgebildet ist.

5. Vordach (1) einer Fluggastbrücke oder Fluggasttreppe nach Anspruch 4,
**dadurch gekennzeichnet,**
**dass** die Dichtlippe im Querschnitt schalenförmig ausgebildet ist.

6. Vordach (1) einer Fluggastbrücke oder Fluggasttreppe nach einem der voranstehenden Ansprüche,
**dadurch gekennzeichnet,**
**dass** sich der Vorsatz (10, 10a, 14, 17) über die Länge des Dachschenkels (6) erstreckt.

7. Vordach (1) einer Fluggastbrücke oder Fluggasttreppe nach einem der voranstehenden Ansprüche,
**dadurch gekennzeichnet,**
**dass** der Vorsatz (10, 10a, 14, 17) lösbar mit dem Bumper (5), insbesondere dem Dachschenkel des Bumpers (6) lösbar verbindbar ist.

8. Vordach (1) einer Fluggastbrücke oder Fluggasttreppe nach Anspruch 7,
**dadurch gekennzeichnet,**
**dass** zur lösbaren Verbindung des Vorsatzes (10, 10a, 14, 17) mit dem Bumper z. B. ein Klettband oder Druckknöpfe vorgesehen sind.

9. Vordach (1) einer Fluggastbrücke oder Fluggasttreppe nach Anspruch 4 oder 5,
**dadurch gekennzeichnet,**
**dass** die Dichtlippe im Bereich der Oberseite des Dachschenkels (6) des Bumpers (5) mit dem Dachschenkel verbunden ist.

10. Vordach (1) einer Fluggastbrücke oder Fluggasttreppe nach einem der voranstehenden Ansprüche,
**dadurch gekennzeichnet,**
**dass** der Vorsatz (10, 10a, 17) einen luftdicht abgeschlossenen Raum bildet.

11. Vordach (1) einer Fluggastbrücke oder Fluggasttreppe nach Anspruch 10,
**dadurch gekennzeichnet,**
**dass** der Vorsatz (10, 10a, 17) aufblasbar ist.
